(19) **Europäisches Patentamt**
**European Patent Office**
**Office européen des brevets**

(11) **EP 3 159 304 B1**

(12) **EUROPEAN PATENT SPECIFICATION**

(45) Date of publication and mention
of the grant of the patent:
**26.06.2019 Bulletin 2019/26**

(51) Int Cl.:
*C01B 3/04* (2006.01)  *B01J 19/12* (2006.01)
*B01J 35/00* (2006.01)

(21) Application number: **15190419.0**

(22) Date of filing: **19.10.2015**

(54) **AN APPARATUS AND ASSOCIATED METHODS FOR WATER SPLITTING**

VORRICHTUNG UND ZUGEHÖRIGE VERFAHREN ZUR WASSERSPALTUNG

APPAREIL ET PROCÉDÉS ASSOCIÉS PERMETTANT LA SÉPARATION DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.04.2017 Bulletin 2017/17**

(73) Proprietor: **LytEn, Inc.
Sunnyvale, CA 94086 (US)**

(72) Inventors:
• **Harris, Nadine
Cambridge, CB3 0FA (GB)**
• **Astley, Michael
Cambridgeshire, CB25 9HP (GB)**
• **Wei, Di
Cambridge, CB4 3TD (GB)**

(74) Representative: **Potter Clarkson
The Belgrave Centre
Talbot Street
Nottingham NG1 5GG (GB)**

(56) References cited:
**US-A1- 2014 272 623     US-A1- 2014 342 254**

• **IAN V. LIGHTCAP ET AL: "Anchoring
Semiconductor and Metal Nanoparticles on a
Two-Dimensional Catalyst Mat. Storing and
Shuttling Electrons with Reduced Graphene
Oxide", NANO LETTERS, vol. 10, no. 2, 7 January
2010 (2010-01-07), pages 577-583, XP055167307,
ISSN: 1530-6984, DOI: 10.1021/nl9035109**
• **XUMING ZHANG ET AL: "Review
Article;Plasmonic photocatalysis;Plasmonic
photocatalysis", REPORTS ON PROGRESS IN
PHYSICS, INSTITUTE OF PHYSICS PUBLISHING,
BRISTOL, GB, vol. 76, no. 4, 4 March 2013
(2013-03-04), page 46401, XP020239464, ISSN:
0034-4885, DOI: 10.1088/0034-4885/76/4/046401**
• **XUEMEI ZHOU ET AL: "Surface plasmon
resonance-mediated photocatalysis by noble
metal-based composites under visible light",
JOURNAL OF MATERIALS CHEMISTRY, vol. 22,
no. 40, 1 January 2012 (2012-01-01), page 21337,
XP055155563, ISSN: 0959-9428, DOI:
10.1039/c2jm31902k**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present disclosure relates to the field of hydrogen gas production by splitting water. Certain disclosed examples may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

Portable electronic devices/apparatus according to examples described herein may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

## Background

The present disclosure relates to the field of hydrogen gas production by splitting water into its constituent atoms, hydrogen and oxygen.

US 2014/272623 discloses an apparatus for water splitting, comprising a plurality of plasmonic nanoparticles on a substrate of parallel wires.

## Summary

According to a first aspect, there is provided an apparatus comprising
at least two plasmonic resonators having a space therebetween, the at least two plasmonic resonators configured to undergo plasmonic resonance upon irradiation by electromagnetic radiation and thereby generate an electric field in the space; and
graphene oxide positioned within the space and in electrical contact with the at least two plasmonic resonators; the graphene oxide configured to:

    attract water molecules into the space;
    protonate water molecules present in the vicinity of the space; and
    by using the generated electric field in the space, split water molecules in the vicinity of the space, thereby producing hydrogen and oxygen.

It will be appreciated that particularly suitable plasmonic resonators need to meet two different criterion, namely that they must be able to provide for plasmonic resonance (which produces a (e.g. large) electric field in the space) and the material from which they are made should catalyse the production of oxygen from the split water molecules. In practise, this can be considered to mean that the material must have a high work function. Platinum meets these criterion well, but gold, palladium and silver are also options.

With regard to catalysing oxygen gas production, the plasmonic resonators may be considered to channel/attract oxygen ions produced from split water molecules away from the graphene oxide, thereby reducing corrosion of the graphene oxide by the presence of oxygen ions (charged species).

The apparatus may further comprise one or more of:

    a hydrogen selective membrane configured to allow the selective passage of hydrogen gas produced from split water molecules away from the apparatus with respect to the oxygen gas produced from the split water molecules; and
    a hydrogen storage material configured to absorb hydrogen gas produced from split water molecules.

The plasmonic resonators may comprise one or more of: a noble metal, platinum, gold, palladium, silver, aluminium, nickel and copper, for example.

The at least two plasmonic resonators may be made of the same material. The at least two plasmonic resonators may be made of different materials (for example, for a two-resonator apparatus, one plasmonic resonator may be made of platinum, while the other plasmonic resonator may be made of gold).

A first end of the apparatus may be connected at to a substrate and a second end, opposite the first end, may not be connected to the substrate. In this way, an array of apparatus may be formed on a substrate, anchored at one end of each apparatus to the substrate while the opposite ends of the apparatus are free.

The plasmonic resonators may be one or more of: rod shaped, substantially spherical, ovoid, pyramidal, cubic, cone-shaped, and gapped-prisms, for example. Each of the two or more plasmonic resonators may have substantially the same shape.

There are many nanoparticle examples (including those produced via wet chemistry techniques) for the resonators. The resonators can be any shaped nanoparticle which produces a single sharp resonance, which can couple to an identical/different shaped particle (with its associated sharp resonance) so that both particle resonances can interact and produce an overall geometry resonance of the desired wavelength

The graphene oxide may comprise a plurality of at least partially overlapping graphene oxide layers.

There may be provided a plurality of apparatus dispersed in water.

There may be a plurality of apparatus arranged in an array on a substrate and attached to the substrate such that each of the plurality of apparatus is connected at one end of one plasmonic resonator of each apparatus to the substrate.

The plurality of apparatus may comprise one or more of:

at least one apparatus comprising plasmonic resonators made of a first material, and at least one further apparatus comprising plasmonic resonators made of a second material different to the first material;

at least one apparatus comprising plasmonic resonators having a first size, and at least one further apparatus comprising plasmonic resonators having a second size different to the first size;

at least one apparatus comprising plasmonic resonators separated by a space having a first space size, and at least one further apparatus comprising plasmonic resonators separated by a space having a second space size different to the first space size; and

at least one apparatus comprising plasmonic resonators of a first shape, and at least one further apparatus comprising plasmonic resonators of a second shape different to the first shape.

A surface of the graphene oxide of the apparatus configured to contact water molecules may be functionalised such that the pH of the surface increases the rate of water splitting compared with a non-functionalised surface. The surface may be functionalised by acidic species (e.g., sulphuric acid) being present at the surface acting to lower the pH of the surface.

According to a further aspect, there is provided a method comprising:

depositing plasmonic material to form a first plasmonic resonator;

depositing graphene oxide in electrical contact with the first plasmonic resonator;

depositing further plasmonic material to form a second plasmonic resonator in electrical contact with the graphene oxide such that the graphene oxide is positioned within a space between the first and second plasmonic resonators;

wherein the first and second plasmonic resonators are configured to undergo plasmonic resonance upon irradiation by electromagnetic radiation and thereby generate an electric field in the space; and wherein the graphene oxide is configured to:

attract water molecules into the space;

protonate water molecules present in the vicinity of the space; and

by using the generated electric field in the space, split water molecules in the vicinity of the space, thereby producing hydrogen and oxygen.

The plasmonic material and graphene oxide may be deposited using a template, such that:

the plasmonic material deposited to form the first plasmonic resonator is deposited into a well in the template;

the graphene oxide is deposited into the well;

the further plasmonic material deposited to form the second plasmonic resonator is deposited into the well; thereby positioning the graphene oxide within the space between the first and second plasmonic resonators; the method further comprising:

removing the template.

The template may be anodized aluminium oxide (AAO), and may be removed using a selective etch process to release the apparatus once the apparatus is formed.

The plasmonic material may deposited onto an array of pillars attached to a substrate to form an array of first and/or second plasmonic resonators.

The steps of any method disclosed herein do not have to be performed in the exact order disclosed, unless explicitly stated or understood by the skilled person.

According to a further aspect, there is provided a computer readable medium comprising computer program code stored thereon, the computer readable medium and computer program code being configured to, when run on at least one processor, perform any method as disclosed herein, for example the following method:

depositing plasmonic material to form a first plasmonic resonator;

depositing graphene oxide in electrical contact with the first plasmonic resonator;

depositing further plasmonic material to form a second plasmonic resonator in electrical contact with the graphene oxide such that the graphene oxide is positioned within a space between the first and second plasmonic resonators;

wherein the first and second plasmonic resonators are configured to undergo plasmonic resonance upon irradiation by electromagnetic radiation and thereby generate an electric field in the space; and wherein the graphene oxide is configured to:

attract water molecules into the space;

protonate water molecules present in the vicinity of the space; and

by using the generated electric field in the space, split water molecules in the vicinity of the space, thereby producing hydrogen and oxygen.

Corresponding computer programs (which may or may not be recorded on a carrier) for implementing one or more of the methods disclosed herein are also within the present disclosure and encompassed by one or more of the described example embodiments.

Throughout the present specification, descriptors relating to relative orientation and position, such as "top", "bottom", "left", "right", "above" and "below", as well as any adjective and adverb derivatives thereof, are used in the sense of the orientation of the apparatus as presented in the drawings. However, such descriptors are not intended to be in any way limiting to an intended use of the described examples.

References to "light" throughout this specification may be understood to encompass the visible light wavelength range of the electromagnetic spectrum as well as other wavelength ranges of the electromagnetic spectrum; similarly references to the "electromagnetic spectrum" of course include the visible light wavelength range as well as other wavelength ranges (e.g., infra-red, ultra-violet, and others).

References to plasmonic resonators may be taken to include plasmonic particles and plasmonic nanoparticles in examples where the resonators are particles (in particular nanoparticles if the particle size, e.g. diameter, is of the nanoscale, e.g., between about 1nm and about 100nm in some examples, between about 100nm and about 2500nm in some examples, between about 2500nm and about 10,000nm in some examples, or any combination/overlapping range thereof). Plasmonic grating structures may also be used as plasmonic resonators.

The present disclosure includes one or more corresponding aspects, example embodiments or features in isolation or in various combinations whether or not specifically stated (including claimed) in that combination or in isolation. Corresponding means and functional units for performing one or more of the discussed functions are also within the present disclosure.

The above summary is intended to be merely exemplary and non-limiting.

**Brief Description of the Figures**

A description is now given, by way of example only, with reference to the accompanying drawings, in which:-

Figure 1a illustrates an apparatus according to examples disclosed herein;
Figure 1b illustrates a plurality of apparatus, and means for collecting hydrogen gas according to examples disclosed herein;
Figure 2 illustrates schematically a water splitting reaction according to examples disclosed herein;
Figure 3 illustrates the effect of changing the space size of an apparatus according to examples described herein;
Figure 4 illustrates an electric field simulation for an apparatus according to examples described herein;
Figure 5 illustrates schematically layered graphene oxide according to examples described herein;

Figure 6 illustrates keto-enol tautomerism which may occur in graphene oxide when apparatus as disclosed herein are in use;
Figure 7 illustrates a polymer electrolyte membrane electrolyser for investigating water splitting;
Figures 8 and 13 illustrate a stability (Pourbaix) diagram for water;
Figure 9 illustrates schematically a method of manufacture of apparatus according to examples described herein;
Figure 10 illustrates schematically another method of manufacture of apparatus according to examples described herein;
Figure 11 illustrates schematically another method of manufacture of apparatus according to examples described herein; and
Figure 12 shows a computer-readable medium comprising a computer program configured to perform, control or enable the methods of Figures 9, 10 or 11.

**Description of Specific Aspects/Embodiments**

Large-scale hydrogen production via solar energy water splitting has the potential to produce clean fuel via renewable resources, and may become central to a sustainable hydrogen economy that will replace fossil fuels.

Challenges such as short minority carrier distances, low semiconductor absorption coefficients and large semiconductor bandspaces of water splitting devices can make it difficult for efficient water splitting to take place. Complex structures and geometries may be employed to help overcome such challenges but the resultant apparatus is complicated, difficult to manufacture reliably and expensive to engineer and produce. Additionally, such devices operate when immersed in aqueous environments to allow water to channel throughout the entire device geometry, and are therefore not suited for operation in non-aqueous environments.

Examples disclosed herein describe an apparatus comprising at least two plasmonic resonators having a space therebetween. The at least two plasmonic resonators are configured to undergo plasmonic resonance upon irradiation by electromagnetic radiation and thereby generate an electric field in the space. The apparatus also comprises graphene oxide positioned within the space and in electrical contact with the at least two plasmonic resonators. The graphene oxide is configured to attract water molecules into the space; protonate water molecules present in the vicinity of the space; and, by using the generated electric field in the space, split water molecules in the vicinity of the space, thereby producing hydrogen and oxygen.

The particular properties of graphene oxide combined with plasmonic resonators are combined in apparatus disclosed herein to form a water-splitting device. The hydrophilic and superpermeable nature of graphene oxide allows for water replenishment by directing water to the most important functional area of the plasmonic near-fields at the interface (i.e. in the space) between the plasmonic resonators and the semiconducting graphene oxide. The efficient protonation properties of graphene oxide may be exploited to split water molecules, thereby allowing hydrogen production to take place. Plasmonic resonators, such as noble metal nanoparticles (e.g., platinum nanoparticles) may provide a double function of enhancing electric fields present in the space between the resonators due to strong light absorption capabilities of the particles at their surface plasmon resonance (depending on size/geometry of the nanoparticle, for example), and also providing an oxygen generation catalyst which helps to prevent corrosion of the graphene oxide which may otherwise be caused by a build-up of charge as hydrogen is reduced (a large work function of the material from which the resonators are made helps remove electrons from the oxygen ions to form an oxygen molecule).

The inclusion of graphene oxide in the apparatus may improve the efficiency of water splitting over current state-of-the-art water splitting devices and may allow for operation of the apparatus in non-aqueous (but humid) environments, with the graphene oxide acting to absorb water/humidity from the ambient environment.

Graphene oxide in apparatus as described herein acts as a semiconductor water-splitting mediator, and as a water attractant/hydrophilic/channeller mechanism to enhance the efficiency of water splitting through the rapid replenishment of water to the active areas (e.g., the space) within the apparatus between the plasmonic resonators. If the plasmonic resonators comprise a noble metal, such as platinum, they may act as an oxygen generation catalyst, which acts to remove excess charge produced by the reduction of hydrogen and so acting to prevent the graphene oxide from being corroded by the charged species.

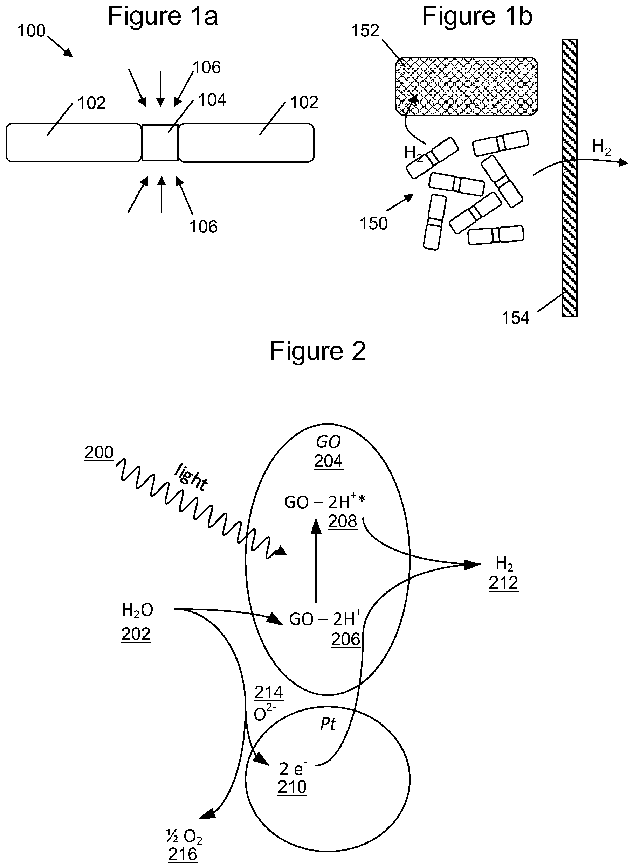

Figure 1a illustrates an apparatus 100 according to examples disclosed herein. It is desirable for a water splitting apparatus 100 for the electric field (which causes the separation of electrons and holes) to be located at the semiconductor/water interface (so in this case at the graphene oxide 104/water 106 interface since graphene oxide 104 is a semiconductor). Plasmonic particles/resonators 102 can provide electric near-fields at the particle/resonator surface when they are at resonance. It is these electric near-fields in the apparatus 100, located at least within the space between the plasmonic resonators 102, which can be exploited for water splitting.

When an individual plasmonic resonator 102 (for example, a rod/nanorod) is illuminated it produces two plasmonic resonances: one that corresponds to excitation along the transverse (short) rod axis; and another that corresponds to excitation along the longitudinal (long) rod axis (this is termed a "dipole resonance"). The size and position within the frequency spectrum of these resonances can depend upon the material, diameter and length of the plasmonic resonator/nanorod 102.

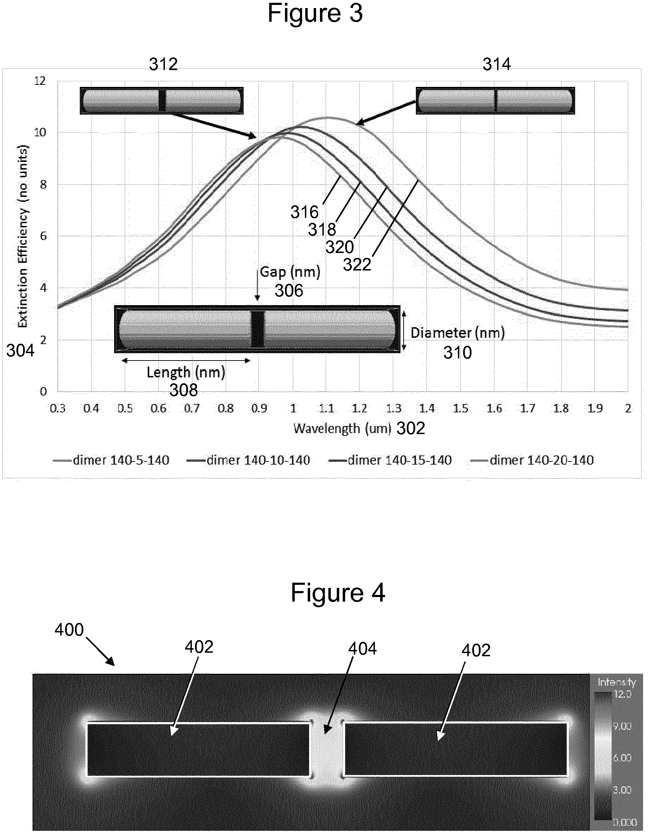

If another plasmonic resonator/nanorod 102 is located at the end of the first plasmonic resonator/nanorod 102, so that there is a small space between the two closest plasmonic resonator/nanorod end faces, this will then cause the individual longitudinal plasmon resonances of both plasmonic resonators/nanorods 102 to interact and red-shift the resulting plasmon resonance from its original position. The shift/variation of the resulting plasmon resonance position depends upon the size of the space between the plasmonic resonators/nanorods 102. In effect, the closer the two ends of the plasmonic resonators/nanorods 102 are, the greater the red-shifting of the plasmon resonance. This is discussed in more detail in relation to figure 3.

The apparatus 100 comprises two plasmonic resonators 102 having a space therebetween. The two plasmonic resonators 102 are configured to undergo plasmonic resonance upon irradiation by electromagnetic radiation and thereby generate an electric field in the space. There is graphene oxide 104 positioned within the space which is in electrical contact with the two plasmonic resonators 102. The graphene oxide 104 in this case may be described as abutting the ends of the plasmonic resonators 102 at the space, but it will be appreciated that it needs to be in electrical contact with the respective plasmonic resonators, e.g., for charge transfer between the plasmonic resonators and graphene oxide to take place. The plasmonic resonators 102 may comprise a high work function material, such as a high work function noble metal, e.g., platinum or gold.

The hydrophilic nature of graphene oxide 104 will cause water 106 to be channelled to be within the space between the two plasmonic resonators 102. That is, the graphene oxide 104 attracts water molecules 106 into the space. This hydrophilic property of graphene oxide 104 can cause water 106 to be readily replenished in the active area (the space and the vicinity of the space) of the apparatus 100 as water located in the space becomes split to form hydrogen and oxygen.

Water 106 may be concentrated/directed into the space in which there may be large plasmonic electric near-fields present between the two plasmonic resonators 102 while the apparatus 100 is at a resonance. This directing of water to the "reaction site" (the space and vicinity thereof) may help to cause the protonation/splitting of water molecules present by directing them to be in the vicinity of the space. By using the generated electric field in the space, the graphene oxide 104 can split water molecules in (and in the vicinity of) the space, thereby producing hydrogen and oxygen.

In other examples, there may be more than two plasmonic resonators 102, for example there may be three (or more) such nanorod-shaped resonators each with an end located at a space in which graphene oxide 104 is located.

Graphene oxide 104 has a particular affinity for water 106 and the inclusion of graphene oxide 104 between the plasmonic resonators 102 can effectively "pump" water 106 through the apparatus 100 (without the requirement of external energy sources, for example, microfluidic channels). This hydrophilic nature of graphene oxide 104 allows the apparatus to operate in a humid gaseous environment, because a water 106 film will form from the humid environment on the surface of the graphene oxide 104. Graphene oxide 104 also acts to efficiently generate protons 102 when water is present, making the production of hydrogen energetically favourable.

Figure 1b illustrates a plurality of apparatus 150, and means for collecting hydrogen gas 152, 154 according to examples disclosed herein. Because water splitting produces both hydrogen and oxygen from the same dimer, a method of separating the hydrogen may be needed to collect the produced hydrogen.

Figure 1b shows that the apparatus may comprise a hydrogen selective membrane 154 such as a thin-film palladium alloy membrane which is configured to allow the passage of hydrogen gas produced from split water molecules away from the apparatus, but prevent the passage of other species such as oxygen ions/molecules produces from the split water molecules.

For example, the membrane may be positioned at an outlet of the container in which the apparatus are stored in water, to filter out and allow the release of hydrogen from other gases as they are produced in the container. Also shown in Figure 1b is a hydrogen storage material 152, such as metal hydride pellets, configured to absorb hydrogen gas produced from split water molecules. Such material may be placed into the dimer solution (i.e. the water), to absorb the hydrogen gas as it is produced. The pellets may then be removed and used for hydrogen storage and transport, and subsequently may be heated to release the hydrogen gas when it is required.

The hydrogen selective membrane 154 and/or the hydrogen storage material 152 may be located proximal to the apparatus 150, that is, proximal to the sites of hydrogen production at the spaces of the plasmonic resonator/graphene oxide apparatus 150. The close proximity of the hydrogen storage material 152 to the apparatus 150 may allow for more rapid and/or efficient capture and storage of hydrogen gas. The close proximity of the hydrogen selective membrane 154 to the apparatus 150 may allow for more rapid and/or efficient channelling of produced hydrogen away from the water splitting apparatus to a hydrogen storage facility.

The wavelength of light/electromagnetic radiation should be high enough to supply the energy needed to release hydrogen from the water (this reaction requires 0.236eV, which corresponds to an electromagnetic radiation wavelength of 5.25$\mu$m). The spectrum of sunlight has predominantly a much shorter wavelength than this, so theoretically there is plenty of energy available in visible light electromagnetic radiation for the water splitting process to occur using the apparatus described herein.

By using a plurality of apparatus 150 as described herein having different plasmonic resonators varied according to tuning their plasmonic resonant frequencies to different portions of a particular incident energy frequency spectrum, the combined absorption of the plurality of apparatus 150 could be matched to, for example, the solar spectrum to make efficient use of the incoming electromagnetic radiation energy. The shape, dimensions, spacing size and material may be varied between apparatus 100 in a plurality of apparatus 150, and even within a single apparatus 100, as described in more detail below.

The shapes of the plasmonic resonators 102 may determine which particular wavelengths and wavelength ranges of electromagnetic radiation/light are resonantly absorbed. That is, differently shaped plasmonic resonators 102 will resonantly vibrate at different incoming electromagnetic radiation frequencies/energies. Possible shapes of plasmonic resonator 102 comprise rod shaped (as shown in Figures 1a and 1b), substantially spherical, ovoid, pyramidal, cubic, cone-shaped, and other possible shapes. In the examples of Figures 1a and 1b, each plasmonic resonator 102 in an apparatus 100 has substantially the same shape (nanorod-shaped in this example) and there may be in some examples a plurality of apparatus all having substantially the same shaped plasmonic resonators. In other examples, differently shaped plasmonic resonators may be used in a particular apparatus (for example, a nanorod and a substantially spherical nanoparticle may be separated by a space filled with graphene oxide in electrical contact with both the nanorod and the substantially spherical nanoparticle to form an apparatus 100). Other shape combinations are possible.

In some examples a plurality of apparatus 150 may comprise at least one apparatus 100 comprising plasmonic resonators of a first shape, and at least one further apparatus 100 comprising plasmonic resonators of a second shape different to the first shape. For example, there may be a first plurality of apparatus in which each apparatus comprises two nanorods separated by a graphene oxide filled space, while in a second plurality of apparatus there are apparatus each having four spherical nanoparticles separated by a graphene oxide filled space, and the first and second pluralities may be together in a mixture.

The dimensions of the plasmonic resonators 102 may also determine which particular wavelengths and wavelength ranges of electromagnetic radiation/light are resonantly absorbed. That is, differently sized plasmonic resonators 120 will resonantly vibrate at different incoming electromagnetic radiation frequencies/energies. The dimensions which may be tuned include, for example, the diameter of substantially spherical plasmonic resonators; the smaller and larger diameters of ovoid plasmonic resonators; the length and/or diameter of rod-shaped plasmonic resonators 102, and the base diameter and/or heights of cone-shaped plasmonic resonators, for example.

In some examples the dimensions of the plasmonic resonators 102 of a particular apparatus 100 may all be substantially the same and different particular apparatus within a plurality 150 may have different plasmonic resonator dimensions with respect to one another. That is, a plurality of apparatus may comprise at least one apparatus comprising plasmonic resonators having a first size, and at least one further apparatus comprising plasmonic resonator having a second size different to the first size. In other examples, the different plasmonic resonators of a single apparatus may be different (for example, an apparatus having four nanorod-shaped plasmonic resonators may have two nanorods of length 140nm and the other two nanorods of length 200nm). Of course many other combinations are possible.

As well as the dimensions of the plasmonic resonators themselves being tuneable to resonantly vibrate to particular electromagnetic radiation frequencies/frequency ranges, the size of the space between the two (or more) plasmonic resonators may also shift the electromagnetic radiation frequency/energy at which the apparatus will be at resonance. Thus changing the size of the space may also be performed to tune the sensitivity of the apparatus to a particular incident electromagnetic radiation frequency/energy range. That is, a plurality of apparatus may comprise at least one apparatus comprising plasmonic resonators separated by a space having a first space size, and at least one further apparatus comprising plasmonic resonators separated by a space having a second space size different to the first space size.

Further still, the material/materials from which the plasmonic resonators 102 are made may affect the electromagnetic radiation frequency/energy at which the apparatus 100 will be at resonance. Platinum may be chosen due to its high work function which allows for good oxygen-catalysing properties which helps to create oxygen gas from the charged oxygen species resulting from water splitting, thereby reducing the extent to which the graphene oxide may be corroded by the presence of charged oxygen species present in the graphene oxide due to water splitting. However, other noble metals such as silver, gold or palladium could also be used to form the plasmonic resonators. Changing the material changes the resonant plasmon frequency of the plasmonic resonators 102 and of the apparatus 100.

In some examples, a plurality of apparatus may comprise at least one apparatus comprising plasmonic resonators made of a first material, and at least one further apparatus comprising plasmonic resonators made of a second material different to the first material. For example, about half the apparatus in a plurality may each comprise only platinum plasmonic resonators, and the remaining apparatus may each comprise only gold plasmonic resonators. In other examples, asymmetric apparatus may be formed comprising, for example, a platinum plasmonic resonator on one side and a gold plasmonic resonator on the other side of the apparatus. Other material combinations are possible. In other examples, a plasmonic resonator may comprise more than one element. For example, a nanorod shaped plasmonic resonator of an apparatus may comprise a gold core with a platinum outer layer.

As an example, if a gold/Pt "core-shell" structure was required, then it would be better if the core were made from a dielectric material as opposed to another plasmonic material to allow for a greater control over the position of the plasmon resonance. Core-shell plasmonic structures (with a dielectric core-plasmonic metal structure) have good resonances because the resultant plasmonic resonance is the combination of the surface plasmon resonance set up at the boundary between the dielectric core and the inner shell boundary of the metal and the resonance set up at the outer metal shell boundary and the surrounding medium. The thickness of the shell enables very good tunability. If, however there was a wish to have, say silver (which oxidises) surrounded by Pt, then this might be a method to protect the silver. The benefit of silver/platinum core shell particles might be that it would behave as a rod, comprised of a material with a combined metallic refractive index.

Thus it can be appreciated that the apparatus described here are readily tunable to different incident electromagnetic radiation frequencies in different ways, allowing for apparatus for water splitting configured to operate at a particular frequency/frequency range of incident electromagnetic radiation. Such tunability may be used to create a plurality of apparatus comprising plasmonic resonators formed from different materials, having different dimensions, different shapes and/or different space widths (between apparatus and/or within a single apparatus), which may help to cover a wider, or a particular, electromagnetic radiation wavelength range of interest (e.g. the visible spectrum).

In further examples the surface of the graphene oxide which is exposed to allow for contact with water to be split (that is, the surface of the graphene oxide not in direct contact with the plasmonic resonators) may be functionalised such that the pH of the surface increases. The increased pH would increase the rate of water splitting compared with a non-functionalised surface. By way of an explanation, the surface of graphene oxide is believed to be coated with complex mixtures of highly oxidized polyaromatic carboxylated fragments (oxidative debris). Therefore, mixing the graphene oxide with a base, such as potassium hydroxide or sodium hydroxide can reduce/remove some or all of the oxidative debris, altering its surface pH.

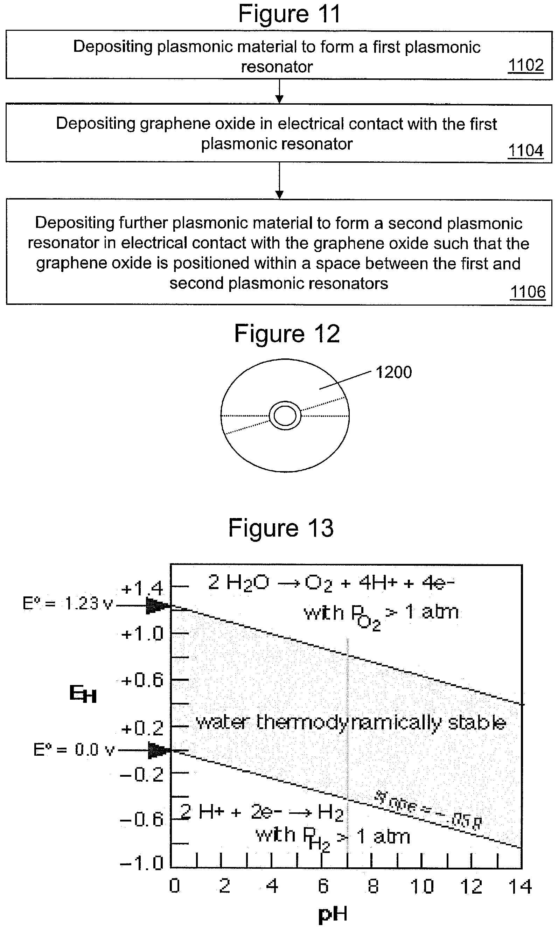

The Pourbaix diagram of Figure 13 (where the slope is -0.058) shows the pH influence in the electrolysis potential of water.

If graphene oxide was washed by alkaline solutions such as potassium hydroxide, it will become base. If the electrolysis potential is lowered and, given same energy being applied, the water splitting speed will be facilitated.

Figure 2 illustrates schematically a possible water splitting reaction/mechanism according to examples disclosed herein. Graphene oxide 204 and, in this example, a platinum plasmonic resonator nanoparticle 210 are shown (of course other forms of plasmonic resonator may be used as described above).

Water 202 is attracted to the vicinity of the space where the graphene oxide (GO) 204 is located between the plasmonic resonators 210. The interaction of the water molecules ($H_2O$) 202 within the graphene oxide 204 splits the water molecules ($H_2O$) 202 to create free protons ($2H^+$) 206. The free protons ($2H^+$) 206 can be excited ($2H^{+*}$) 208 by incoming light/electromagnetic radiation 200. The excited free protons ($2H^{+*}$) 208 can then combine with electrons ($2e^-$) 210 (e.g., from the plasmonic resonator 210) to create hydrogen gas ($H_2$) 212 which may be captured as described above. The remaining holes ($h^+$) may be attracted to the plasmonic resonators 210, where they can combine with free oxygen ions ($O^{2-}$) 214 created in the water splitting process to create oxygen gas ($1/2\ O_2$) 216.

The at least two plasmonic resonators 210 may be considered to be configured to catalyse oxygen gas 216 production from oxygen ions 214 produced from split water molecules 202. In this way corrosion of the graphene oxide 204 due to the presence of charged (oxygen) species is reduced compared with a system not having oxygen gas catalysing properties. The oxygen catalysis properties of the plasmonic resonators 210, acting to "channel away" charged oxygen species from the graphene oxide by catalysing their reaction to form oxygen gas, can help reduce corrosion of the graphene oxide 204 which could occur due to the presence of charged species (e.g., $O2^-$, $h^+$). It will be appreciated that, if there is a build up of oxygen ions, then they may combine with the carbon from the graphene oxide to produce carbon dioxide.

Figure 3 illustrates the effect of changing the space size 306 of an apparatus according to examples described herein. A discrete dipole approximation (DDA) simulation was carried out for apparatus having differently sized spaces 306 (i.e. changing the separation between the ends of the plasmonic resonator nanorods). The DDA simulation was used to investigate the optical response (the extinction efficiency 304) of platinum nanorod dimer structures (i.e. an apparatus having two rod-shaped platinum plasmonic resonators, 312, 314). Each nanorod was modelled to have a diameter 310 of 35nm and a length 308 of 140nm (thus the apparatus as a whole has a length of 280nm plus the gap width). Different apparatus having gap widths 306 of 5nm (line 322 in Figure 3), 10nm (line 320), 15nm (line 318) or 20nm (line 316) were investigated. The simulation demonstrates that changing the space size 306 (plasmonic resonator spacing) can change the plasmonic resonant frequency 302 of the apparatus. An operational plasmonic resonance at an incident electromagnetic radiation wavelength 302 of 900nm - 1000nm was obtained over the range of space sized modelled (the 140-20-140 dimer has a resonance at approx. 900 nm and the 140-5-140 dimer has a resonance at approx. 1000 nm). Electric field polarisation is modelled as being along the long axis/length of the apparatus. This simulation does not include the presence of any graphene oxide, and just demonstrates the electric field due to two plasmonic resonators.

It can be seen that the apparatus with space width smaller than 20nm (that is, line 318, line 320 and line 322) produce a dipole resonance an incident electromagnetic radiation wavelength of larger than around 1000 nm and the apparatus with space width of 20nm (line 316) produces a resonance at an incident electromagnetic radiation wavelength of around 960nm. It may be desirable to have a resonance occur at incident electromagnetic radiation wavelengths of lower than around 1000nm. For example, sunlight is around 500nm (although platinum plasmonic resonance would not occur at such low levels). A variety of different sized devices can be mixed together to get broader adsorption of light wavelengths.

Figure 4 illustrates an electric field simulation for an apparatus according to examples described herein. The modelled apparatus 400 is of a nanorod-dimer arrangement of plasmonic resonators 402 each of 140nm in length, and having a space between them 404 of 20nm (as per line 316 of Figure 3). The intensity of the electric near-field at a resonance of 960nm (as determined from the simulation discussed in relation to Figure 3) can be seen to be much higher within the space 404 between the nanorods 402 than outside this space. This demonstrates how the electric field between the plasmonic resonators has a peak intensity within the space which is where water splitting can take place (thus where the graphene oxide is located).

Greater electric near-fields can be attained by reducing the space size. However for the nanorod sizes modelled in these simulations, reducing the space size has the effect of red-shifting the plasmonic resonance out of the desired range (that is, shifting it to higher incident radiation wavelengths as discussed in relation to Figure 3 where a smaller space increased the wavelength of incident electromagnetic radiation at which plasmonic resonance occurs). Geometry optimization simulations may be performed to determine the optimum geometry and space size for a particular apparatus to produce the desired near-field intensity and plasmonic resonance (for example, for a given incident electromagnetic radiation wavelength).

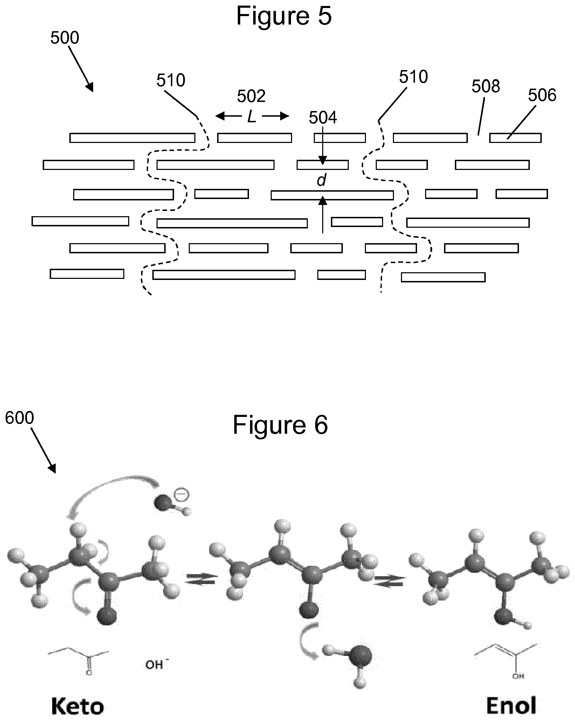

Figure 5 illustrates schematically a cross sectional view of layered graphene oxide 500 according to examples described herein, showing water flow through the graphene oxide layers. Hydroxyl groups within graphene oxide are understood to be at least partly responsible for the hydrophilic nature of graphene oxide. Moreover the low-impedance permeation of water 510 through graphene oxide 500 is understood to be at least partly due to the low-friction flow of monolayer water 510 through the 2D capillaries 508 formed by closely spaced graphene oxide sheets 506 as per Figure 5. Molecular dynamics simulations may be performed to show that the closely-spaced lamellae of graphene oxide 506 create a capillary pressure of the order of 1000 bars, resulting in water flow velocities through the graphene oxide reaching speed of the order of meters per second. From this, apparatus comprising nanorod-dimer plasmonic resonators of 35nm diameter and 20nm space/separation would be able to absorb around 2 picolitres of water per second (for example if the apparatus are present in concentrations of range of nM to μM, i.e. $10^{15}$ to $10^{18}$ dimers per litre). Thus the apparatus would not be expected to suffer from mass transport limitations of water on the reaction rate of water being split to form hydrogen gas.

Graphene oxide exhibits extraordinary ionic conduction for protons. Proton conduction along nanoscale films such as graphene oxide is usually higher than in bulk compounds (graphene oxide has a much higher proton conduction than bulk graphite oxide). Protons can propagate through hydrogen-bonding networks along an adsorbed water film within graphene oxide. The origin of the acidity of graphene oxide may arise not from dissociation of pre-existing acidic groups (since their content is very low) but by the generation of protons via constant reactions with water. Water molecules may also be able to generate protons through a self-dissociation process when in contact with graphene oxide. Graphene oxide generates protons in the presence of water and is highly conductive for protons, implying that graphene oxide is a very efficient photocatalyst for hydrogen generation and water splitting when combined with an oxygen-producing catalyst (such as a high work function noble metal, e.g., platinum, gold).

Figure 6 illustrates keto-enol tautomerism for 1,4-dihydroxynaphthalene. Keto-enol tautomerism refers to a chemical equilibrium between a keto form (a ketone or an aldehyde) and an enol (an alcohol). The enol and keto forms are said to be tautomers of each other. Graphene oxide contains keto and enol groups that exhibit keto-enol tautomerism as illustrated in Figure 6. There is a type of isomerism existing in such systems. The conversion between keto and enol form is generally slow unless base or acid is added to speed up the reaction.

Such organic groups may enable graphene oxide to have pseudo-redox couples (not perfect reversible oxidation by reduction). As the pseudo-redox reaction is reversible, graphene oxide would not be consumed when hydrogen is released when used for water splitting as part of apparatus as described herein. The reaction process for splitting water can be accelerated if the environment is acidic. This can be achieved by adding an acid such as sulphuric acid to the water solution. Sulphuric acid is a liquid and will not be released when water is split, and so by adding water to the system at the same rate as it is split, the acidity of the solution will remain constant. Alternatively, a method to increase the acidity at the reaction site could be to functionalise the graphene oxide with additional acidic groups.

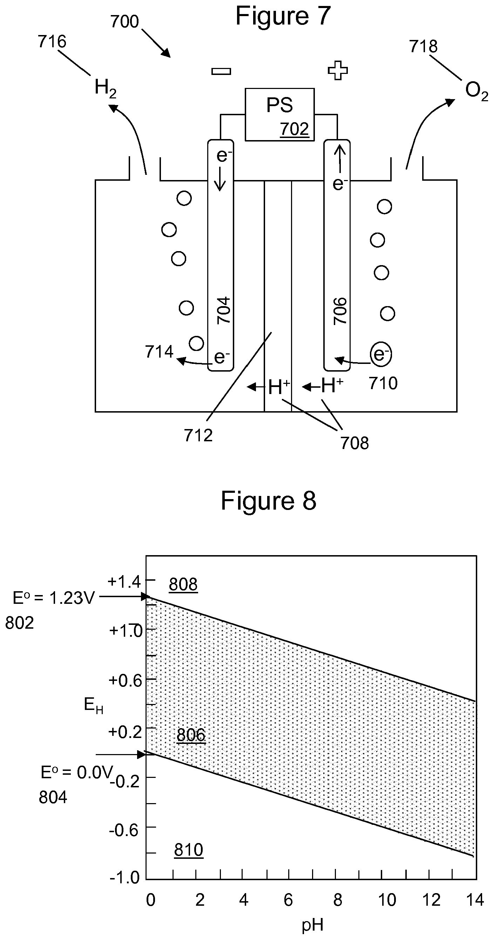

Figure 7 illustrates a polymer electrolyte membrane electrolyser 700 for investigating water splitting. In a polymer electrolyte membrane (PEM) electrolyser 700, the PEM 712 is a solid speciality plastic material which prevents the passage of hydrogen and oxygen gas but permits the passage of protons. Water reacts at the anode 706 to form oxygen 718 and positively charged hydrogen ions (protons) 708. The electrons 710 flow through an external circuit 706-702-704 and the hydrogen ions 708 selectively move across the PEM 712 to the cathode 704. At the cathode 704, hydrogen ions 708 combine with electrons 714 from the external circuit 706-702-704 to form hydrogen gas 716.

The reaction at the anode 706 may be given as $2H_2O \rightarrow O_2 + 4H^+ + 4e^-$. The reaction at the cathode 704 may be given as $4H^+ + 4e^- \rightarrow 2H_2$. The half-cell reaction itself is the standard hydrogen electrode definition $2H^+_{(aq)} + 2e^- \rightarrow H_{2(g)}$ with E = 0V.

However, the proton concentration may not be 1M; for example in the case of graphene oxide the pH is around pH4, giving a proton concentration of around 1 x $10e^{-4}$ M. The voltage to generate hydrogen can be calculated by the Nernst Equation (full cell):

$$E_{cell} = E^{\ominus}_{cell} - \frac{RT}{zF} \ln Q_r$$

where $E_{cell}$ is the cell potential at the temperature of interest, $E^{\theta}_{cell}$ is the standard cell potential, $R$ is the universal gas constant 8.314 J K$^{-1}$ mol$^{-1}$, $T$ is the absolute temperature, $z$ is the number of moles of electrons transferred in the cell reaction or half-reaction, $F$ is the Faraday constant $9.649 \times 10^4$ C mol$^{-1}$, and $Q_r$ is the reaction quotient (in this case 1 x $10e^{-4}$). The voltage needed is 0.236 V to generate $H_2$ gas from graphene oxide having pH4 media. If the pH becomes lower (less than 4), the required voltage is smaller still. Figure 8 shows this in more detail.

This relation can be shown in the Fig. 8 which shows a stability (Pourbaix) diagram for water. A Pourbaix diagram illustrates possible stable phases of an aqueous electrochemical system. The two $E^0$ conditions, $E^0$=1.23V 802 and $E^0$=0.0V 804 shown on the $E_H$ axis show "standard" conditions of unit H$^+$ activity (pH=0) and gas pressures of 1 atm. At combinations of pH and E that lie outside the region 806 in which water is thermodynamically stable, the partial pressures of $O_2$ or $H_2$ exceed 1 atm, signifying the decomposition of water (in the upper region 808 in which $P_{O2}$>1atm and in the lower region 810 in which or $P_{H2}$>1atm). The unity partial pressures are of course arbitrary criteria; in a system open to the atmosphere, water can decompose even at much lower $H_2$ partial pressures, and at oxygen pressures below 0.2 atm. Fortunately, these processes are in most cases quite slow.

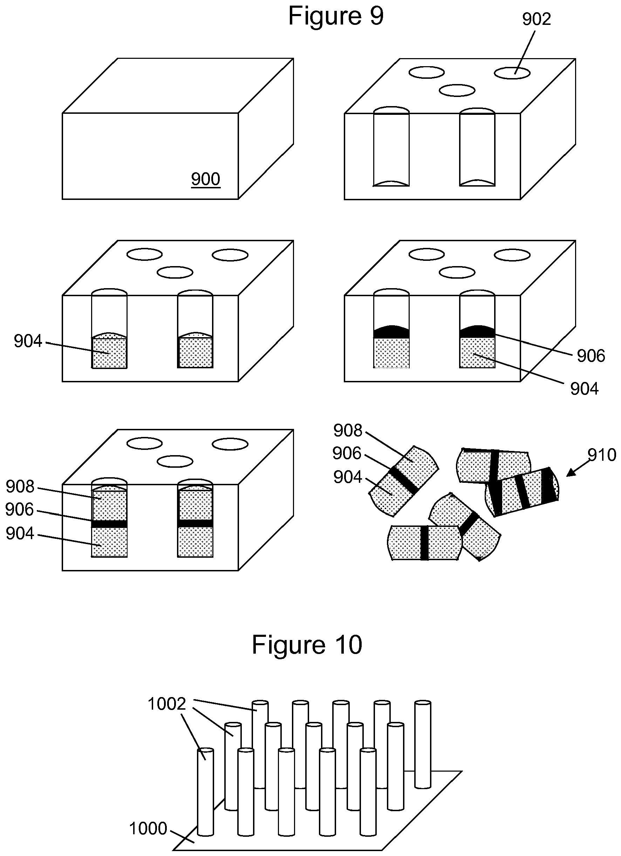

Both figures 9 and 10 illustrate example methods of manufacture of the apparatus disclosed herein.

Figure 9 illustrates schematically a method of manufacture of apparatus according to examples described herein. In this method, a series of nanorod dimers are formed as plasmonic resonators with graphene oxide inbetween each pair of rods. The rods may be made of, for example, platinum, gold, silver, palladium, or another suitable plasmonic material.

A material 900 is used to create a template with holes/wells in 902. In some examples the template is anodized aluminium oxide (AAO). A plasmonic material is deposited into the holes/wells 902 in the template to form a first plasmonic resonator (nanorod) 904. After depositing the first plasmonic resonator material 904, graphene oxide is deposited 906 into the holes/wells. Further plasmonic material deposited into the holes/wells to form the second plasmonic resonator (nanorod) 908. In this way the graphene oxide 906 is positioned between the first and second plasmonic resonators. The material (AAO) deposited to form the template is then etched away, for example using a selective etching process, and the plasmonic resonator/graphene apparatus 910 may be mixed with a surfactant to stabilise the resulting structures and improve dispersion in solution. The structures 910 may then be rinsed and can be re-suspended in water, for example via sonication.

Figure 10 illustrates schematically another method of manufacture of apparatus according to examples described herein. In this method an array is formed, for example by using interference lithography to synthesise photoresist pillars 1002 on a glass or silicon substrate 1000. Following the formation of photoresist pillars, 1002, a plasmonic material may be deposited, for example by thermal deposition, onto the array of pillar structures 1002 on the substrate 1000 to enable synthesis of large area arrays of plasmonic structures for water splitting apparatus as disclosed herein. First and/or second plasmonic resonators may be formed in this way (i.e. for one end and/or for the opposite end of a two-resonator apparatus with graphene oxide positioned therebetween in electrical contact with the respective plasmonic resonators).

Once a plurality of apparatus are formed, they may be simply dispersed in a transparent water container that is exposed to sunlight. The sunlight can pass through the transparent container to the apparatus surrounded by water, and cause plasmonic resonances to occur in the apparatus, which in turn causes water present at the in the vicinity of the graphene oxide in the gap between plasmonic resonators to be split into hydrogen and oxygen. To ensure the apparatus remain in a stable suspension, appropriate surfactants may be used, for example amphiphilic surfactants (e.g. 4-(5-Dodecyl) benzenesulfonate, Sodium stearate), and O-(2-carboxyethyl)-O'-(2-mercaptoethyl)heptaethylene glycol which can be used to stabilise gapped rod structures. As the apparatus are not consumed during the hydrogen production reactions, fresh water can be continually fed into the container as hydrogen gas is produced to replenish the system.

Different methods can be used to make different shaped plasmonic resonators, for example. One approach is to coat metal nanospheres with graphene oxide, using a technique such as layer-by-layer assembly. Then depositing these spheres onto a platinum surface so a gap is formed between the surface and the sphere. Interference lithography can also be suitable, particularly for complex structures.

Figure 11 shows the main steps 1102, 1104, 1106 of a method of making the present apparatus. The method comprises depositing plasmonic material to form a first plasmonic resonator 1102; depositing graphene oxide in electrical contact with the first plasmonic resonator 1104; and depositing further plasmonic material to form a second plasmonic resonator in electrical contact with the graphene oxide such that the graphene oxide is positioned within a space between the first and second plasmonic resonators 1106. The first and second plasmonic resonators are configured to undergo plasmonic resonance upon irradiation by electromagnetic radiation and thereby generate an electric field in the space, and the graphene oxide is configured to attract water molecules into the space, protonate water molecules present in the vicinity of the space, and, by using the generated electric field in the space, split water molecules in the vicinity of the space, thereby producing hydrogen and oxygen.

Apparatus described herein may provide the advantages of being able to work in a non-aqueous environment, allowing for a high level of water penetration for splitting within high-surface area structures, and larger aqueous areas coming into contact with plasmonic near-fields. Plasmonic resonators separated by a graphene oxide-filled space may operate dispersed in water or may be tethered at one end to a substrate to make an array of apparatus. Fluid convection is proportional to surface area, so large surface area arrays comprising a plurality of such apparatus also facilitate an increased flow (or convection) of water past the surface. The pH of the graphene oxide-water surface may be tailored through functionalization to increase the reaction efficiency. The flexibility of being able to vary the shape, materials, plasmonic resonator dimensions and space dimensions between plasmonic resonators for an apparatus all allow for a high level of tunability of the apparatus to a particular energy spectrum of incident electromagnetic radiation.

Figure 12 illustrates schematically a computer/processor readable medium 1200 providing a computer program according to one embodiment. The computer program comprises computer code configured to perform, control or enable one or more of the method steps of Figure 11. In this example, the computer/processor readable medium 1200 is a disc such as a digital versatile disc (DVD) or a compact disc (CD). In other embodiments, the computer/processor readable medium 1200 may be any medium that has been programmed in such a way as to carry out an inventive function. The computer/processor readable medium 900 may be a removable memory device such as a memory stick or memory card (SD, mini SD, micro SD or nano SD).

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

While there have been shown and described and pointed out fundamental novel features as applied to different embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:

   at least two plasmonic resonators having a space therebetween, the at least two plasmonic resonators configured to undergo plasmonic resonance upon irradiation by electromagnetic radiation and thereby generate an electric field in the space; and

graphene oxide positioned within the space and in electrical contact with the at least two plasmonic resonators; the graphene oxide configured to:

attract water molecules into the space;

protonate water molecules present in the vicinity of the space; and

by using the generated electric field in the space, split water molecules in the vicinity of the space, thereby producing hydrogen and oxygen.

2. The apparatus of claim 1, wherein the at least two plasmonic resonators are configured to catalyse oxygen gas production from oxygen ions produced from split water molecules.

3. The apparatus of claim 1, wherein the apparatus further comprises one or more of:

a hydrogen selective membrane configured to allow the selective passage of hydrogen gas produced from split water molecules away from the apparatus with respect to the oxygen gas produced from the split water molecules; and

a hydrogen storage material configured to absorb hydrogen gas produced from split water molecules.

4. The apparatus of claim 1, wherein the plasmonic resonators comprise one or more of: a noble metal, platinum, gold, palladium, silver, aluminium, nickel, and copper.

5. The apparatus of claim 1, wherein one of:

the at least two plasmonic resonators are made of the same material; and

the at least two plasmonic resonators are made of different materials

6. The apparatus of claim 1, wherein a first end of the apparatus is connected at to a substrate and a second end, opposite the first end, is not connected to the substrate.

7. The apparatus of claim 1, wherein the plasmonic resonators are one or more of: rod shaped, substantially spherical, ovoid, pyramidal, cubic, cone-shaped and gapped-prisms.

8. The apparatus of claim 1, wherein the graphene oxide comprises a plurality of at least partially overlapping graphene oxide layers.

9. A plurality of apparatus as claimed in claim 1, wherein the plurality of apparatus are dispersed in water.

10. The plurality of apparatus as claimed in claim 9, wherein the plurality of apparatus are arranged in an array on a substrate and attached to the substrate such that each of the plurality of apparatus is connected at one end of one plasmonic resonator of each apparatus to the substrate.

11. The plurality of apparatus as claimed in claim 9 or claim 10, wherein the plurality of apparatus comprise one or more of:

at least one apparatus comprising plasmonic resonators made of a first material, and at least one further apparatus comprising plasmonic resonator made of a second material different to the first material;

at least one apparatus comprising plasmonic resonators having a first size, and at least one further apparatus comprising plasmonic resonator having a second size different to the first size;

at least one apparatus comprising plasmonic resonators separated by a space having a first space size, and at least one further apparatus comprising plasmonic resonators separated by a space having a second space size different to the first space size; and

at least one apparatus comprising plasmonic resonators of a first shape, and at least one further apparatus comprising plasmonic resonators of a second shape different to the first shape.

12. A method comprising:

depositing plasmonic material to form a first plasmonic resonator;

depositing graphene oxide in electrical contact with the first plasmonic resonator;

depositing further plasmonic material to form a second plasmonic resonator in electrical contact with the graphene oxide such that the graphene oxide is positioned within a space between the first and second plasmonic resonators;

wherein the first and second plasmonic resonators are configured to undergo plasmonic resonance upon irradiation by electromagnetic radiation and thereby generate an electric field in the space; and

wherein the graphene oxide is configured to:

attract water molecules into the space;

protonate water molecules present in the vicinity of the space; and

by using the generated electric field in the space, split water molecules in the vicinity of the space, thereby producing hydrogen and oxygen.

13. The method of claim 12, wherein the plasmonic material and graphene oxide are deposited using a template, such that:

the plasmonic material deposited to form the first plasmonic resonator is deposited into a well in the template;
the graphene oxide is deposited into the well;
the further plasmonic material deposited to form the second plasmonic resonator is deposited into the well; thereby positioning the graphene oxide within the space between the first and second plasmonic resonators; the method further comprising:
removing the template.

14. The method of claim 12, wherein the plasmonic material is deposited onto an array of pillars attached to a substrate to form an array of first and/or second plasmonic resonators.

15. A computer readable medium comprising computer program code stored thereon, the computer readable medium and computer program code being configured to, when run on at least one processor, perform a method according to any of claims 12 to 14.

**Patentansprüche**

1. Einrichtung, die Folgendes umfasst:

wenigstens zwei plasmonische Resonatoren mit einem Spalt dazwischen, wobei die wenigstens zwei plasmonischen Resonatoren konfiguriert sind, beim Bestrahlen mit elektromagnetischer Strahlung plasmonische Resonanz einzugehen und dadurch ein elektrisches Feld in dem Spalt zu erzeugen; und
Graphenoxid, das innerhalb des Spalts positioniert ist und in elektrischem Kontakt mit den wenigsten zwei plasmonischen Resonatoren steht; wobei das Graphenoxid zu Folgendem konfiguriert ist:

Anziehen von Wassermolekülen in den Spalt;
Protonieren von Wassermolekülen, die in der Umgebung des Spalts vorliegen; und
unter Verwendung des erzeugten elektrischen Felds in dem Spalt, Spalten von Wassermolekülen in der Umgebung des Spalts, wodurch Wasserstoff und Sauerstoff erzeugt werden.

2. Einrichtung nach Anspruch 1, wobei die wenigstens zwei plasmonischen Resonatoren konfiguriert sind, Sauerstoffgasproduktion von Sauerstoffionen, die aus gespaltenen Wassermolekülen erzeugt werden, zu katalysieren.

3. Einrichtung nach Anspruch 1, wobei die Einrichtung ferner Folgendes umfasst:

eine wasserstoffselektive Membran, die konfiguriert ist, das selektive Durchtreten von Wasserstoffgas, das aus den gespaltenen Wassermolekülen erzeugt wird, von der Einrichtung weg zu ermöglichen, in Bezug auf das Sauerstoffgas, das aus den gespaltenen Wassermolekülen erzeugt wird; und/oder
ein Wasserstoffspeichermaterial, das konfiguriert ist, Wasserstoffgas, das aus gespaltenen Wassermolekülen erzeugt wird, zu absorbieren.

4. Einrichtung nach Anspruch 1, wobei die plasmonischen Resonatoren ein Edelmetall, Platin, Gold, Palladium, Silber, Aluminium, Nickel und/oder Kupfer umfassen.

5. Einrichtung nach Anspruch 1, wobei:

die wenigstens zwei plasmonischen Resonatoren aus demselben Material hergestellt sind; oder
die wenigstens zwei plasmonischen Resonatoren aus unterschiedlichen Materialien hergestellt sind.

6. Einrichtung nach Anspruch 1, wobei ein erstes Ende der Einrichtung mit einem Substrat verbunden ist und ein zweites Ende, das dem ersten Ende gegenüberliegt, nicht mit dem Substrat verbunden ist.

7. Einrichtung nach Anspruch 1, wobei die plasmonischen Resonatoren Folgendes sind: stabförmig, im Wesentlichen sphärisch, ovoid, pyramidenförmig, würfelförmig, kegelförmig und/oder Lücken-Prismen.

8. Einrichtung nach Anspruch 1, wobei das Graphenoxid mehrere sich wenigstens zum Teil überlappende Graphenoxidschichten umfasst.

9. Mehrere Einrichtungen nach Anspruch 1, wobei die mehreren Einrichtungen in Wasser zerstreut sind.

10. Mehrere Einrichtungen nach Anspruch 9, wobei die mehreren Einrichtungen in einem Array auf einem Substrat angeordnet sind und an dem Substrat befestigt sind, sodass jede der mehreren Einrichtungen an einem Ende des plasmonischen Resonators jeder Einrichtung mit dem Substrat verbunden ist.

**11.** Mehrere Einrichtungen nach Anspruch 9 oder 10, wobei die mehreren Einrichtungen Folgendes umfassen:

wenigstens eine Einrichtung, die plasmonische Resonatoren aus einem ersten Material umfasst, und wenigstens eine Einrichtung, die einen plasmonischen Resonator aus einem zweiten Material, das nicht dem ersten Material entspricht, umfasst;
wenigstens eine Einrichtung, die plasmonische Resonatoren mit einer ersten Größe umfasst, und wenigstens eine weitere Einrichtung, die plasmonische Resonatoren mit einer zweiten Größe, die nicht der ersten Größe entspricht, umfasst;
wenigstens eine Einrichtung, die durch einen Spalt mit einer ersten Spaltgröße getrennte plasmonische Resonatoren umfasst, und wenigstens eine weitere Einrichtung, die durch einen Spalt mit einer zweiten Spaltgröße getrennte plasmonische Resonatoren umfasst, die nicht der ersten Spaltgröße entspricht; und/oder
wenigstens eine Einrichtung, die plasmonische Resonatoren mit einer ersten Form umfasst, und wenigstens eine weitere Einrichtung, die plasmonische Resonatoren mit einer zweiten Form, die nicht der ersten Form entspricht, umfasst.

**12.** Verfahren, das Folgendes umfasst:

Ablagern von plasmonischem Material zum Ausbilden eines ersten plasmonischen Resonators;
Ablagern von Graphenoxid in elektrischem Kontakt mit dem ersten plasmonischen Resonator;
Ablagern von weiterem plasmonischen Material zum Ausbilden eines zweiten plasmonischen Resonators in elektrischem Kontakt mit dem Graphenoxid, sodass das Graphenoxid innerhalb eines Spalts zwischen dem ersten und dem zweiten plasmonischen Resonator positioniert ist;
wobei der erste und der zweite plasmonische Resonator konfiguriert sind, beim Bestrahlen mit elektromagnetischer Strahlung plasmonische Resonanz einzugehen und dadurch ein elektrisches Feld in dem Spalt zu erzeugen; und
wobei das Graphenoxid zu Folgendem konfiguriert ist:

Anziehen von Wassermolekülen in den Spalt;
Protonieren von Wassermolekülen, die in der Umgebung des Spalts vorliegen; und
unter Verwendung des erzeugten elektrischen Feldes in dem Spalt, Spalten von Wassermolekülen in der Umgebung des Spalts, wodurch Wasserstoff und Sauerstoff erzeugt werden.

**13.** Verfahren nach Anspruch 12, wobei das plasmonische Material und das Graphenoxid unter Verwendung einer Schablone abgelagert werden, sodass:

das plasmonische Material, das zum Ausbilden des ersten plasmonischen Resonators abgelagert wird, in eine Senke in der Schablone abgelagert wird;
das Graphenoxid in die Senke abgelagert wird;
das weitere plasmonische Material, das zum Ausbilden des zweiten plasmonischen Resonators abgelagert wird, in die Senke abgelagert wird; wodurch das Graphenoxid innerhalb des Spalts zwischen dem ersten und dem zweiten plasmonischen Resonator positioniert wird; wobei das Verfahren ferner Folgendes umfasst: Entfernen der Schablone.

**14.** Verfahren nach Anspruch 12, wobei das plasmonische Material in ein Array von Kontakthöckern abgelagert wird, die an einem Substrat zum Ausbilden eines Arrays von ersten und/oder von zweiten plasmonischen Resonatoren befestigt sind.

**15.** Computerlesbares Medium, das einen darauf gespeicherten Computerprogrammcode umfasst, wobei das computerlesbare Medium und der Computerprogrammcode konfiguriert sind, ein Verfahren nach einem der Ansprüche 12 bis 14 durchzuführen, wenn sie auf wenigstens einem Prozessor aufgeführt werden.

**Revendications**

**1.** Appareil comprenant :

au moins deux résonateurs plasmoniques ayant un espace entre eux, les au moins deux résonateurs plasmoniques étant configurés pour subir une résonance plasmonique lors d'une irradiation par rayonnement électromagnétique et générer ainsi un champ électrique dans l'espace ; et
de l'oxyde de graphène positionné au sein de l'espace et en contact électrique avec les au moins deux résonateurs plasmoniques ; l'oxyde de graphène étant configuré pour :

attirer des molécules d'eau dans l'espace ;
protoner des molécules d'eau présentes à proximité de l'espace ; et
en utilisant le champ électrique généré dans l'espace, dissocier des molécules d'eau à proximité de l'espace, produisant ainsi de l'hydrogène et de l'oxygène.

2. Appareil selon la revendication 1, dans lequel les au moins deux résonateurs plasmoniques sont configurés pour catalyser une production d'oxygène gazeux à partir d'ions d'oxygène produits à partir de molécules d'eau dissociées.

3. Appareil selon la revendication 1, dans lequel l'appareil comprend en outre un ou plusieurs parmi :

une membrane à hydrogène sélective configurée pour permettre le passage sélectif d'hydrogène gazeux produit à partir de molécules d'eau dissociées à distance de l'appareil par rapport à l'oxygène gazeux produit à partir des molécules d'eau dissociées ; et
un matériau de stockage d'hydrogène configuré pour absorber l'hydrogène gazeux produit à partir de molécules d'eau dissociées.

4. Appareil selon la revendication 1, dans lequel les résonateurs plasmoniques comprennent un ou plusieurs parmi : un métal noble, du platine, de l'or, du palladium, de l'argent, de l'aluminium, du nickel et du cuivre.

5. Appareil selon la revendication 1, dans lequel l'une de :

les au moins deux résonateurs plasmoniques sont réalisés en le même matériau ; et
les au moins deux résonateurs plasmoniques sont réalisés en matériaux différents.

6. Appareil selon la revendication 1, dans lequel une première extrémité de l'appareil est connectée à un substrat et une seconde extrémité, opposée à la première extrémité, n'est pas connectée au substrat.

7. Appareil selon la revendication 1, dans lequel les résonateurs plasmoniques ont un ou plusieurs parmi : des prismes en forme de tige, sensiblement sphériques, ovoïdes, pyramidaux, cubiques, en forme de cône et à entrefer.

8. Appareil selon la revendication 1, dans lequel l'oxyde de graphène comprend une pluralité de couches d'oxyde de graphène au moins partiellement chevauchantes.

9. Pluralité d'appareils selon la revendication 1, dans lesquels la pluralité d'appareils est dispersée dans l'eau.

10. Pluralité d'appareils selon la revendication 9, dans lesquels la pluralité d'appareils est agencée en un réseau sur un substrat et est fixée au substrat de sorte que chacun de la pluralité d'appareils soit connecté au niveau d'une extrémité d'un résonateur plasmonique de chaque appareil au substrat.

11. Pluralité d'appareils selon la revendication 9 ou la revendication 10, dans lesquels la pluralité d'appareils comprend un ou plusieurs parmi :

au moins un appareil comprenant des résonateurs plasmoniques réalisés en un premier matériau, et au moins un appareil supplémentaire comprenant un résonateur plasmonique réalisé en un second matériau différent du premier matériau ;
au moins un appareil comprenant des résonateurs plasmoniques ayant une première taille, et au moins un appareil supplémentaire comprenant un résonateur plasmonique ayant une seconde taille différente de la première taille ;
au moins un appareil comprenant des résonateurs plasmoniques séparés par un espace ayant une première taille d'espace, et au moins un appareil supplémentaire comprenant des résonateurs plasmoniques séparés par un espace ayant une seconde taille d'espace différente de la première taille d'espace ; et
au moins un appareil comprenant des résonateurs plasmoniques d'une première forme, et au moins un appareil supplémentaire comprenant des résonateurs plasmoniques d'une seconde forme différente de la première forme.

12. Procédé comprenant :

le dépôt de matériau plasmonique pour former un premier résonateur plasmonique ;
le dépôt d'oxyde de graphène en contact électrique avec le premier résonateur plasmonique ;
le dépôt de matériau plasmonique supplémentaire pour former un second résonateur plasmonique en contact électrique avec l'oxyde de graphène de sorte que l'oxyde de graphène soit positionné au sein d'un espace entre les premier et second résonateurs plasmoniques ;
dans lequel les premier et second résonateurs plasmoniques sont configurés pour subir une résonance plasmonique lors d'une irradiation par rayonnement électromagnétique et générer ainsi un champ électrique dans l'espace ; et
dans lequel l'oxyde de graphène est configuré pour :

attirer des molécules d'eau dans l'espace ;
protoner des molécules d'eau présentes à proximité de l'espace ; et
en utilisant le champ électrique généré dans l'espace, dissocier des molécules d'eau à proximité de l'espace, produisant ainsi de l'hydrogène et de l'oxygène.

**13.** Procédé selon la revendication 12, dans lequel le matériau plasmonique et l'oxyde de graphène sont déposés à l'aide d'une matrice, de sorte que :

le matériau plasmonique déposé pour former le premier résonateur plasmonique soit déposé dans un puits de la matrice ;
l'oxyde de graphène soit déposé dans le puits ;
le matériau plasmonique supplémentaire déposé pour former le second résonateur plasmonique soit déposé dans le puits ; positionnant ainsi l'oxyde de graphène au sein de l'espace entre les premier et second résonateurs plasmoniques ; le procédé comprenant en outre :
l'enlèvement de la matrice.

**14.** Procédé selon la revendication 12, dans lequel le matériau plasmonique est déposé sur un réseau de piliers fixés à un substrat pour former un réseau de premier et/ou de second résonateurs plasmoniques.

**15.** Support lisible par ordinateur comprenant un code de programme d'ordinateur stocké dessus, le support lisible par ordinateur et le code de programme d'ordinateur étant configurés pour, lorsqu'ils sont exécutés sur au moins un processeur, réaliser un procédé selon l'une quelconque des revendications 12 à 14.

# Figure 1a

# Figure 1b

# Figure 2

# Figure 3

# Figure 4

# Figure 5

# Figure 6

**Keto** OH⁻

**Enol**

## Figure 7

## Figure 8

# Figure 9

# Figure 10

# Figure 11

| Depositing plasmonic material to form a first plasmonic resonator     1102 |
|---|

↓

| Depositing graphene oxide in electrical contact with the first plasmonic resonator     1104 |
|---|

↓

| Depositing further plasmonic material to form a second plasmonic resonator in electrical contact with the graphene oxide such that the graphene oxide is positioned within a space between the first and second plasmonic resonators     1106 |
|---|

# Figure 12

1200

# Figure 13

$E^o = 1.23$ v

$2 H_2O \rightarrow O_2 + 4H^+ + 4e^-$ with $P_{O_2} > 1$ atm

water thermodynamically stable

$E^o = 0.0$ v

$2 H^+ + 2e^- \rightarrow H_2$ with $P_{H_2} > 1$ atm

slope = -.05 8

pH

**EP 3 159 304 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014272623 A